# EUROPEAN PATENT APPLICATION

(11) **EP 4 714 326 A1**
(43) Date of publication of application: **25.03.2026**
(21) Application number: 24815684.6
(22) Date of filing: 03.04.2024
(51) Int. Cl.: A47L 11/40, A47L 11/32, B25J 13/08, B25J 11/00

(54) **CLEANING ROBOT FOR SENSING AND CLEANING FLOOR AND CONTROL METHOD THEREFOR**

(30) Priority: 01.06.2023 KR 20230071006; 31.07.2023 KR 20230099833
(71) Applicant: Samsung Electronics Co., Ltd., Suwon-si, Gyeonggi-do 16677 (KR)
(72) Inventor: SO, Jeayun, Suwon-si, Gyeonggi-do 16677 (KR); KIM, Kyongsu, Suwon-si, Gyeonggi-do 16677 (KR); KIM, Jinhee, Suwon-si, Gyeonggi-do 16677 (KR); JEONG, Yeonkyu, Suwon-si, Gyeonggi-do 16677 (KR)
(74) Representative: Walaski, Jan Filip
(86) International application number: PCT/KR2024/004350
(87) International publication number: WO 2024/248305

(57) **Abstract**

Provided are a cleaning robot for sensing and cleaning a floor and a control method of the cleaning robot. The cleaning robot may include a floor sensing sensor, a wet cleaning module, at least one memory storing one or more instructions, and at least one processor, wherein the at least one processor may be configured to, by executing the one or more instructions stored in the memory, pause driving of the wet cleaning module and perform pad-up of a cleaning pad, when the cleaning robot is located on a carpet, and resume driving of the wet cleaning module and perform pad-down of the cleaning pad, when a floor is sensed through the floor sensing sensor while moving along a driving path, based on moving a reference distance to the floor along the driving path.

## Description

### Technical Field

Embodiments of the present disclosure relate to a robot for sensing and cleaning a floor, a control method of the robot, and a computer-readable recording medium storing a computer program for performing the control method of the robot.

### Background Art

As cleaning robots advance, cleaning robots may provide various functions. For example, a cleaning robot may recognize home appliances or furniture through object recognition and perform a cleaning operation suitable for the recognized home appliances or furniture. Also, a cleaning robot may prevent falling by using a falling prevention sensor. In addition, a cleaning robot may sense a carpet and increase a suction force when driving on the carpet.

Furthermore, a cleaning robot may provide a wet-mop cleaning function. In this case, the cleaning robot may clean the floor by using a cleaning pad provided on the bottom surface of the cleaning robot.

### Disclosure of Invention

### Solution to Problem

An aspect of an embodiment of the present disclosure may provide a cleaning robot for sensing and driving on a floor. The cleaning robot may include a floor sensing sensor, a wet cleaning module, at least one memory storing one or more instructions, and at least one processor. Also, the at least one processor may be configured to, by executing the one or more instructions stored in the memory, pause driving of the wet cleaning module and perform pad-up of a cleaning pad, when the cleaning robot is located on a carpet. Also, the at least one processor may be configured to, when a floor is sensed through the floor sensing sensor while moving along a driving path, resume driving of the wet cleaning module and perform pad-down of the cleaning pad, based on moving a reference distance to the floor along the driving path.

An aspect of an embodiment of the present disclosure may provide a cleaning method of a cleaning robot. The cleaning method include pausing driving of a wet cleaning module of the cleaning robot and performing pad-up of a cleaning pad, when the cleaning robot is located on a carpet. Also, the cleaning method may include, when a floor is sensed through a floor sensing sensor of the cleaning robot while moving along a driving path, resume driving of the wet cleaning module and performing pad-down of the cleaning pad, based on moving a reference distance to the floor along the driving path.

An aspect of an embodiment of the present disclosure may provide a computer-readable recording medium having recorded thereon a program for performing a cleaning method of a cleaning robot on a computer.

### Brief Description of Drawings

FIG. 1 illustrates a method by which a cleaning robot senses a floor to control a cleaning pad, according to an embodiment of the present disclosure.
FIG. 2 illustrates a block diagram of a cleaning robot according to an embodiment of the present disclosure.
FIG. 3 illustrates a cleaning robot according to an embodiment of the present disclosure.
FIG. 4 illustrates a flowchart of a method by which a cleaning robot senses a floor to control a cleaning pad, according to an embodiment of the present disclosure.
FIG. 5 illustrates a method by which a cleaning robot performs pad-down of a cleaning pad after moving away from a carpet by a reference distance or more, according to an embodiment of the present disclosure.
FIG. 6 illustrates a method by which a cleaning robot performs pad-down of a cleaning pad after moving away from a carpet while moving along a driving path, according to an embodiment of the present disclosure.
FIG. 7 illustrates a method by which a cleaning robot maintains pad-up of a cleaning pad, based on a driving direction being changed while moving to a floor along a driving path, according to an embodiment of the present disclosure.
FIG. 8 illustrates a method by which a cleaning robot controls a cleaning pad when encountering an obstacle while moving from a carpet to a floor, according to an embodiment of the present disclosure.
FIG. 9 illustrates a method by which a cleaning robot performs pad-up or pad-down of a cleaning pad when moving backward after sensing a risk of falling, according to an embodiment of the present disclosure.
FIG. 10 illustrates a method by which a cleaning robot determines a hole blockage of a floor sensing sensor, according to an embodiment of the present disclosure.
FIG. 11 illustrates a method by which a cleaning robot performs pad-up of a cleaning pad on the basis of an inclination of the cleaning robot, according to an embodiment of the present disclosure.
FIG. 12 illustrates a method by which a cleaning robot performs pad-up of a cleaning pad on the basis of an inclination of the cleaning robot, according to an embodiment of the present disclosure.
FIG. 13 illustrates a method by which a cleaning robot performs half-cover driving, according to an embodiment of the present disclosure.
FIG. 14 illustrates a block diagram of a cleaning robot according to an embodiment of the present disclosure.

### Mode for the Invention

Throughout the present disclosure, the expression "at least one of a, b or c" indicates only a, only b, only c, both a and b, both a and c, both b and c, all of a, b, and c, or variations thereof.

Hereinafter, embodiments of the present disclosure will be described in detail with reference to the accompanying drawings so that those of ordinary skill in the art may easily implement the embodiments of the present disclosure. However, the present disclosure may be embodied in many different forms and should not be construed as being limited to the embodiments set forth herein. Also, portions irrelevant to the description of the present disclosure will be omitted in the drawings for a clear description of the present disclosure, and like reference numerals will denote like elements throughout the specification.

The terms used herein are those general terms currently used in the art in consideration of functions in the present disclosure, but the terms may vary according to the intentions of those of ordinary skill in the art, precedents, or new technology in the art. Thus, the terms used herein should be understood not as simple names but based on the meanings of the terms and the overall description of the present disclosure.

Although terms such as "first" and "second" may be used herein to describe various elements or components, these elements or components should not be limited by these terms. These terms are used to distinguish one element from another element.

Also, the terms used herein are only used to describe particular embodiments and are not intended to limit the present disclosure. As used herein, the singular forms "a", "an", and "the" are intended to include the plural forms as well, unless the context clearly indicates otherwise. Also, throughout the specification, when an element is referred to as being "connected" to another element, it may be "directly connected" to the other element or may be "electrically connected" to the other element with one or more intervening elements therebetween. When a part "includes" or "comprises" a component, unless there is a particular description contrary thereto, the part may further include other components, not excluding the other components.

Phrases such as "in some embodiments" or "in an embodiment" appearing in various places in the specification do not necessarily all refer to the same embodiment.

An embodiment of the present disclosure provides a cleaning robot for controlling a cleaning pad based on a carpet area and a method of controlling the cleaning robot.

An embodiment of the present disclosure provides a cleaning robot for controlling a cleaning pad when moving backward and a method of controlling the cleaning robot.

An embodiment of the present disclosure provides a cleaning robot for determining a blockage of a floor sensing sensor and a method of controlling the cleaning robot.

An embodiment of the present disclosure provides a cleaning robot for controlling a cleaning pad based on an inclination of the cleaning robot and a method of controlling the cleaning robot.

An embodiment of the present disclosure provides a cleaning robot for cleaning a carpet based on an inclination of the cleaning robot and a material of a floor and a method of controlling the cleaning robot.

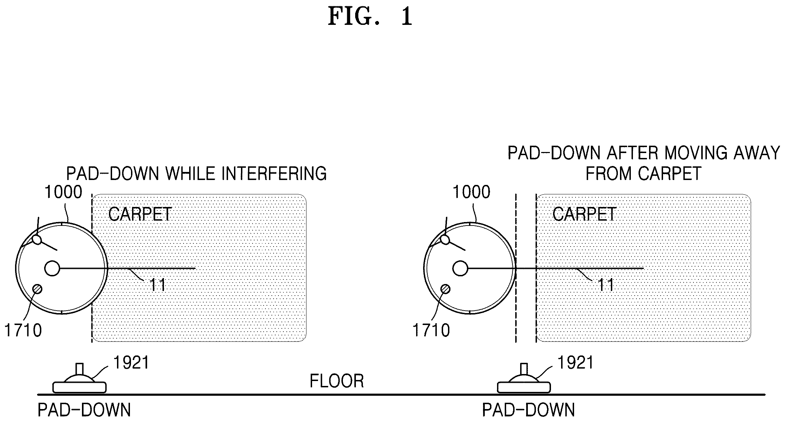

FIG. 1 illustrates a method by which a cleaning robot 1000 senses a floor to control a cleaning pad, according to an embodiment of the present disclosure.

Referring to FIG. 1, the cleaning robot 1000 may perform pad-up of a cleaning pad 1921 when driving on a carpet and perform pad-down of the cleaning pad 1921 when driving on a floor. Also, when the cleaning robot 1000 moves from the carpet to the floor, the cleaning robot 1000 may perform pad-down of the cleaning pad 1921 after the main body of the cleaning robot 1000 moves away from the carpet, in order for the cleaning pad 1921 not to touch the carpet.

Referring to the left side of FIG. 1, the cleaning robot 1000 may perform pad-down of the cleaning pad 1921, based on the floor being sensed through a floor sensing sensor 1710 while driving on the carpet along a driving path 11. Because the floor sensing sensor 1710 is located on the front lower surface of the cleaning robot 1000 but the cleaning pad 1921 is located on the rear lower surface of the cleaning robot 1000, when the cleaning pad 1921 is padded-down immediately when the floor is sensed, the cleaning pad 1921 may touch the carpet and thus the carpet may be wetted, as illustrated in the left side of FIG. 1.

Referring to the right side of FIG. 1, when the floor is sensed while driving along the driving path 11, the cleaning pad 1921 may perform pad-down of the cleaning pad 1921 after moving a reference distance or more from a position at which the floor is sensed, in order for the cleaning pad not to touch the carpet.

The carpet may be a rug including fiber. According to an embodiment of the present disclosure, the carpet may be referred to as a rug. The carpet may include fiber to be wetted with water.

The floor may be a floor including a non-fiber material. For example, the floor may be a finished floor finished with a material such as ceramic tiles, marble tiles, porcelain tiles, wood, vinyl tiles, or vinyl floor paper.

The cleaning pad 1921 may include a wet cleaning pad or a dry cleaning pad.

In the cleaning robot 1000, the reference distance may be preset based on the size of the cleaning robot 1000. For example, the reference distance may be the length of the cleaning robot 1000. Accordingly, the cleaning robot 1000 may perform pad-down of the cleaning pad 1921 after moving by the length of the cleaning robot 1000 or more when the floor starts to be sensed.

According to an embodiment of the present disclosure, when the cleaning robot 1000 moves from the carpet to the floor along a driving path, the cleaning robot 1000 may perform pad-down of the cleaning pad 1921 after completely moving away from the carpet, by performing pad-down of the cleaning pad 1921 after driving a reference distance or more while maintaining a driving direction of the cleaning robot 1000 at a time point when the floor is sensed.

According to an embodiment of the present disclosure, when the cleaning robot 1000 moves from the carpet to the floor along a driving path, when a driving direction of the driving path is changed while moving a reference distance, the driving direction may be changed while maintaining the pause of a wet cleaning module and the pad-up of the cleaning pad 1921.

According to an embodiment of the present disclosure, while the cleaning robot 1000 moves from the carpet to the floor, when an obstacle is sensed at a reference distance or less, the driving direction may be changed while maintaining the pause of the wet cleaning module and the pad-up of the cleaning pad 1921.

Accordingly, the cleaning robot 1000 may prevent the carpet from being wetted, by performing pad-down of the cleaning pad 1921 after completely moving away from the carpet when moving from the carpet to the floor.

According to an embodiment of the present disclosure, the cleaning robot 1000 may attempt backward driving by a predetermined distance, upon sensing a risk of falling of the cleaning robot 1000 through a falling prevention sensor 1750. When a backward movement distance of the cleaning robot 1000 after attempting backward driving is less than or equal to a predetermined backward distance, the cleaning robot 1000 may pause the driving of the wet cleaning module, perform pad-up of the cleaning pad 1921, and then reattempt backward driving.

According to an embodiment of the present disclosure, when the cleaning robot 1000 is docked on a charging station, the cleaning robot 1000 may control the floor sensing sensor 1710 to determine whether a docking floor of the charging station is detected as a floor. Also, based on the docking floor of the charging station being detected as a fiber floor, the cleaning robot 1000 may determine that a hole in which the floor sensing sensor 1710 is provided is blocked by fibers.

According to an embodiment of the present disclosure, the cleaning robot 1000 may perform half-cover driving in which a portion of the cleaning robot 1000 including the floor sensing sensor 1710 is located on the floor, the remaining portion of the cleaning robot 1000 is located on the carpet, and the cleaning robot 1000 drives along the boundary of the carpet. In the half-cover driving, the cleaning robot 1000 may pause the driving of the wet cleaning module and perform pad-up of the cleaning pad 1921.

According to an embodiment of the present disclosure, the cleaning robot 1000 may identify the boundary of the carpet in the half-cover driving. Also, based on the identified boundary of the carpet, the cleaning robot 1000 may determine an on-map position of an area in which the carpet is placed. Also, when the half-cover driving ends, the cleaning robot 1000 may dry clean the interior of the carpet while maintaining the pause of the wet cleaning module and the pad-up of the cleaning pad 1921.

According to an embodiment of the present disclosure, the cleaning robot 1000 may pause the driving of the wet cleaning module and perform pad-up of the cleaning pad 1921, based on the inclination of the cleaning robot 1000 detected through an inertial measurement unit (IMU) sensor exceeding a reference angle.

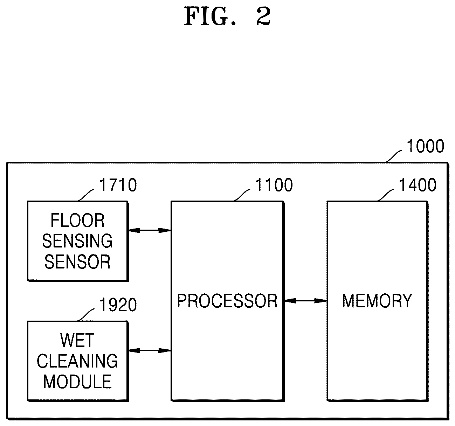

FIG. 2 illustrates a block diagram of a cleaning robot 1000 according to an embodiment of the present disclosure.

Referring to FIG. 2, the cleaning robot 1000 may include a processor 1100, a memory 1400, a floor sensing sensor 1710, and a wet cleaning module 1920.

The cleaning robot 1000 may include a wet cleaning robot dedicated to a wet mop or a cleaning robot configured to simultaneously perform dry cleaning and wet cleaning. Also, the cleaning robot 1000 may include a wet cleaner dedicated to a wet mop or a cleaner configured to simultaneously perform dry cleaning and wet cleaning.

The processor 1100 may control an overall operation of the cleaning robot 1000. The processor 1100 may control the floor sensing sensor 1710 and the wet cleaning module 1920 by executing at least one instruction or programs stored in the memory 1400.

The memory 1400 may store instructions, information, or programs for processing and controlling by the processor 1100.

The floor sensing sensor 1710 may detect the material of a cleaning target surface. For example, the floor sensing sensor 1710 may detect whether the material of the cleaning target surface is fiber or non-fiber.

The floor sensing sensor 1710 may include, but is not limited to, an infrared sensor, an ultrasonic sensor, an RGB sensor, and an infrared camera. The floor sensing sensor 1710 may be provided on the lower surface of the cleaning robot 1000 to receive light reflected from the floor.

When the floor sensing sensor 1710 is an infrared sensor or an ultrasonic sensor, the floor sensing sensor 1710 may irradiate infrared light or ultrasonic waves toward the floor. When the floor is a hard floor such as a wooden or ceramic floor, most of the infrared light or ultrasonic waves irradiated onto the floor may be reflected and then received back by the floor sensing sensor 1710. However, when the floor includes a fiber material such as a carpet rug, the infrared light or ultrasonic waves irradiated onto the floor may be diffusely reflected or absorbed by the fiber and thus only a portion thereof may be received by the floor sensing sensor 1710.

According to an embodiment of the present disclosure, the processor 1100 may control the infrared sensor to periodically irradiate infrared light toward the floor and receive infrared light reflected from the floor. When the ratio of the amount of infrared light reflected from the floor and then received by the infrared sensor to the amount of infrared light irradiated from the infrared sensor is less than or equal to a reference ratio, the processor 1100 may determine that the material of the floor is fiber.

According to an embodiment of the present disclosure, the processor 1100 may control the ultrasonic sensor to periodically irradiate ultrasonic waves toward the floor and receive ultrasonic waves reflected from the floor. When the ratio of the amount of ultrasonic waves reflected from the floor and then received by the ultrasonic sensor to the amount of ultrasonic waves irradiated from the ultrasonic sensor is less than or equal to a reference ratio, the processor 1100 may determine that the material of the floor is fiber.

According to an embodiment of the present disclosure, when the floor sensing sensor 1710 is an RGB camera, the floor sensing sensor 1710 may capture an image of the floor on which the cleaning robot 1000 is located or an image of the floor located in front of the cleaning robot 1000. The processor 1100 may capture an image of the floor through the RGB camera and perform object recognition to detect a carpet or rug in the captured image.

According to an embodiment of the present disclosure, when the floor sensing sensor 1710 is an infrared camera, the floor sensing sensor 1710 may irradiate infrared light in a predetermined pattern shape toward the floor. Also, through the infrared sensor, the floor sensing sensor 1710 may receive infrared light reflected from the floor. The processor 1100 may generate an infrared image based on the infrared light received by the floor sensing sensor 1710, and when the match rate between the shape in the generated image and a predetermined pattern shape is less than or equal to a reference value, the processor 1100 may determine that the material of the floor is fiber.

According to an embodiment of the present disclosure, the processor 1100 may determine whether the floor includes a fabric material, based on at least one of the load of a brush motor, the load of a wheel motor, or the sensor value of an IMU sensor. For example, when the load of a brush motor or the load of a wheel motor is higher than a reference value, the processor 1100 may determine that the floor on which the cleaning robot 1000 is located includes a fabric material. Also, for example, even when the load of a brush motor or the load of a wheel motor is higher than a reference value, when the sensor value of an IMU sensor is out of a reference range, the processor 1100 may determine that the floor on which the cleaning robot 1000 is located does not include a fabric material.

The wet cleaning module 1920 may be a cleaning module for wet-mop cleaning. The wet cleaning module 1920 may include a cleaning pad holder, a cleaning pad motor, a cleaning pad-up/down device module, a water tank, and a water supply motor.

The cleaning pad holder may be a member for attaching a cleaning pad to the cleaning robot 1000. The cleaning pad motor may be a motor for rotating or vibrating the cleaning pad holder. Accordingly, the cleaning pad motor may perform wet mopping by rotating or vibrating the cleaning pad attached to the cleaning pad holder.

The cleaning pad-up/down device module may perform a pad-up operation of adhering a cleaning pad, which has been placed on the floor, to the cleaning robot 1000 or a pad-down operation of adhering a cleaning pad, which has been adhered to the cleaning robot 1000, to the floor. The cleaning pad up-down device module may perform pad-up of the cleaning pad by lifting up the cleaning pad holder and may perform pad-down of the cleaning pad by adhering the cleaning pad holder to the floor.

According to an embodiment of the present disclosure, through the floor sensing sensor 1710, the processor 1100 may determine whether the cleaning robot 1000 is located on the carpet. According to determining that the cleaning robot 1000 is located on the carpet, the processor 1100 may pause the driving of the wet cleaning module and perform pad-up of the cleaning pad. Also, the processor 1100 may increase the suction force to a preset suction force corresponding to the carpet by increasing the output value of a suction motor.

Also, when a floor is sensed through the floor sensing sensor 1710 while moving along a driving path, the processor 1100 may perform wet cleaning by resuming driving of the wet cleaning module 1920 and performing pad-down of the cleaning pad, based on moving a reference distance to the floor along the driving path. Also, the processor 1100 may reduce the suction force back to a suction force before entry into the carpet by reducing the output value of the suction motor.

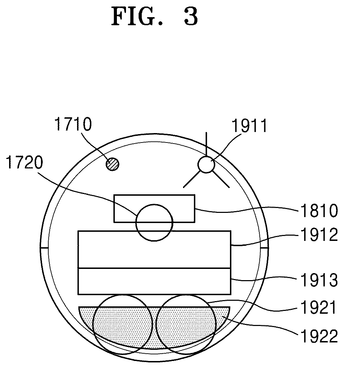

FIG. 3 illustrates a cleaning robot 1000 according to an embodiment of the present disclosure.

Referring to FIG. 3, the cleaning robot 1000 may include, but is not limited to, a floor sensing sensor 1710, a position recognition sensor 1720, a side brush 1911, a drum brush 1912, a dust can 1913, a cleaning pad 1921, a water tank 1922, and a battery 1810.

As illustrated in FIG. 3, the floor sensing sensor 1710 may be provided at the front side of the cleaning robot 1000, and the cleaning pad 1921 may be provided at the rear side of the cleaning robot 1000. Accordingly, the cleaning robot 1000 moving forward may first sense the carpet or floor through the floor sensing sensor 1710, and then, the cleaning pad 1921 may pass over the sensed carpet or floor.

The floor sensing sensor 1710 may detect the material of a cleaning target surface on which the cleaning robot 1000 is located.

The position recognition sensor 1720 may detect the distance between the cleaning robot 1000 and the surrounding environment. The cleaning robot 1000 may generate a map including the structure and position of the surrounding environment, based on the detected distance between the cleaning robot 1000 and the surrounding environment. Also, the cleaning robot 1000 may determine the position of the cleaning robot 1000 on the map.

By rotating and collecting dust or trash placed in front toward a suction port, the side brush 1911 may assist the dust or trash to be suctioned into the suction port.

By rotating around both axes, the drum brush 1912 may assist the dust on the cleaning target surface or the dust collected by the side brush 1911 to be suctioned into the suction port.

The dust can 1913 may store the dust and trash suctioned by the suction motor. The dust can 1913 may include a filter for filtering off the dust and trash in the suctioned air to discharge clean air.

The cleaning pad 1921 may be a mop for wiping the cleaning target surface. Also, the cleaning pad 1921 may absorb the water discharged from the water tank 1922. Also, the cleaning pad 1921 may be detachably attached to the cleaning pad holder.

The water tank 1922 may store water. Also, the cleaning robot 1000 may control the water supply motor to supply the water stored in the water tank 1922 to the cleaning pad 1921 according to a water supply rate set by the user.

The battery 1810 may supply power to the cleaning robot 1000.

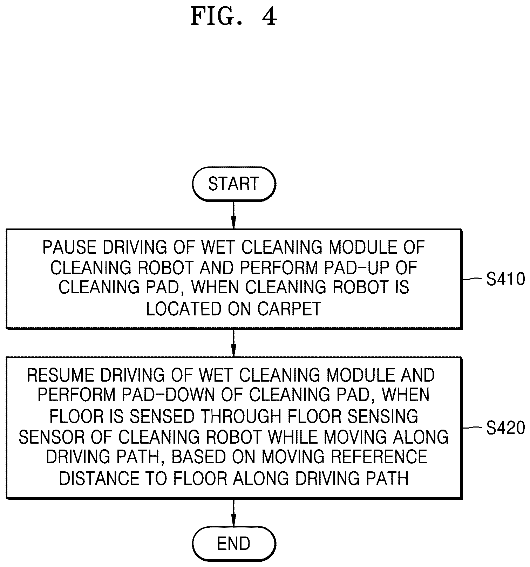

FIG. 4 illustrates a flowchart of a method by which a cleaning robot 1000 senses a floor to control a cleaning pad, according to an embodiment of the present disclosure.

In operation S410, the cleaning robot 1000 may pause the driving of the wet cleaning module of the cleaning robot 1000 and perform pad-up of the cleaning pad, when the cleaning robot 1000 is located on the carpet.

The cleaning robot 1000 may pause the driving of the wet cleaning module of the cleaning robot 1000 and perform pad-up of the cleaning pad, based on the carpet being detected through the floor sensing sensor.

The cleaning robot 1000 may perform only dry cleaning as the cleaning robot 1000 is located on the carpet. Also, the cleaning robot 1000 may increase the suction force to a suction force corresponding to the carpet.

In operation S420, when a floor is sensed through the floor sensing sensor while moving along a driving path, the cleaning robot 1000 may resume driving of the wet cleaning module and perform pad-down of the cleaning pad, based on moving a reference distance to the floor along the driving path.

In the cleaning robot 1000, the reference distance may be preset based on the size of the cleaning robot 1000.

The cleaning robot 1000 may resume driving of the wet cleaning module and perform pad-down of the cleaning pad, based on moving the reference distance, from a position at which the floor is sensed, in a driving direction of the cleaning robot 1000 at a time point when the floor is sensed.

According to an embodiment of the present disclosure, the cleaning robot 1000 may change the driving direction while maintaining the pause of the wet cleaning module and the pad-up of the cleaning pad, based on the driving direction of the driving path being changed while moving the reference distance from the position at which the floor is sensed.

According to an embodiment of the present disclosure, the cleaning robot 1000 may change the driving direction of the driving path by 180 degrees while maintaining the pause of the wet cleaning module and the pad-up of the cleaning pad, when an obstacle is sensed while moving the reference distance from the position at which the floor is sensed.

According to an embodiment of the present disclosure, the cleaning robot 1000 may attempt backward driving by a predetermined distance, upon sensing a risk of falling of the cleaning robot 1000. Also, when a backward movement distance of the cleaning robot 1000 after attempting backward driving is less than or equal to a predetermined backward distance, the cleaning robot 1000 may pause the driving of the wet cleaning module, perform pad-up of the cleaning pad, and then reattempt backward driving.

According to an embodiment of the present disclosure, when the cleaning robot 1000 is docked on a charging station, the cleaning robot 1000 may determine whether a hole in which the floor sensing sensor is provided is blocked by fibers, based on whether a docking floor of the charging station is detected as a floor.

According to an embodiment of the present disclosure, the cleaning robot 1000 may pause the driving of the wet cleaning module and perform pad-up of the cleaning pad, based on an inclination of the cleaning robot 1000 exceeding a reference angle.

According to an embodiment of the present disclosure, the cleaning robot 1000 may pause the driving of the wet cleaning module and perform pad-up of the cleaning pad, based on being in a half-cover driving state in which a portion of the cleaning robot 1000 including the floor sensing sensor is located on the floor, the remaining portion of the cleaning robot 1000 is located on the carpet, and the cleaning robot 1000 drives along the boundary of the carpet.

According to an embodiment of the present disclosure, the cleaning robot 1000 may determine the on-map position of an area in which the carpet is placed, based on identifying the boundary of the carpet. Also, when the half-cover driving state ends, the cleaning robot 1000 may dry clean the interior of the carpet while maintaining the pause of the wet cleaning module and the pad-up of the cleaning pad.

The cleaning robot 1000 may reduce the suction force of the cleaner to a suction force before entry into the carpet after moving the reference distance from the position at which the floor is sensed.

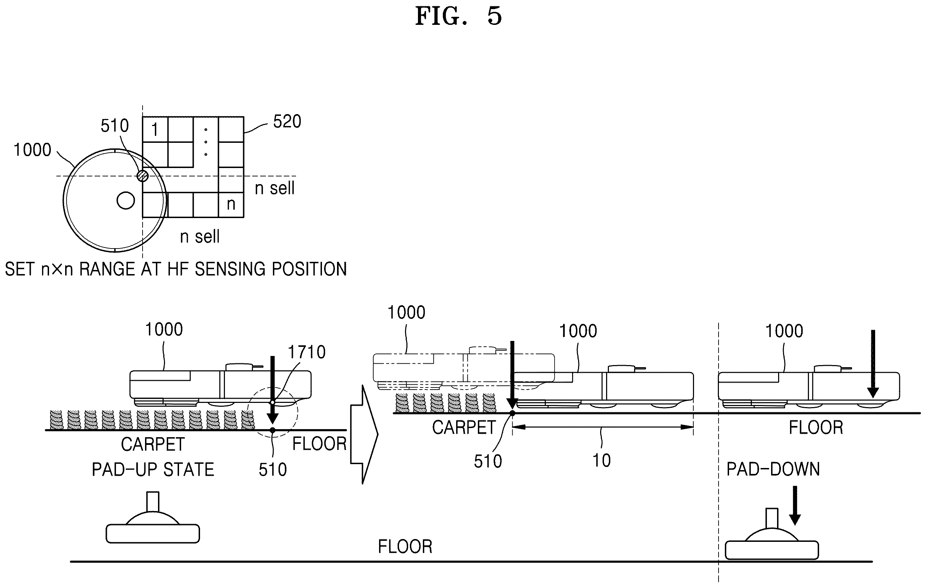

FIG. 5 illustrates a method by which a cleaning robot 1000 performs pad-down of a cleaning pad after moving away from a carpet by a reference distance or more, according to an embodiment of the present disclosure.

Referring to the left side of FIG. 5, the cleaning robot 1000 may drive on the carpet with the cleaning pad padded-up such that the cleaning pad does not touch the carpet when driving on the carpet.

Also, the cleaning robot 1000 may sense the floor through the floor sensing sensor 1710 according to starting to move away from the carpet while driving on the carpet.

Referring to the right side of FIG. 5, the cleaning robot 1000 may sense the floor, move along a driving path by a reference distance 10 or more from a position 510 at which the floor starts to be sensed, and then perform pad-down of the cleaning pad.

The reference distance may be the length of the cleaning robot 1000. For example, the reference distance may be the length of the longest straight line that intersects the cross-section of the cleaning robot 1000. Also, for example, the reference distance may be equal to the length of the cleaning robot 1000 plus a predetermined error margin. The reference distance may be predetermined and stored in the cleaning robot 1000.

When the cleaning pad is padded-down as soon as the floor is sensed, the cleaning pad located behind the floor sensing sensor may touch the carpet and thus the carpet may be wetted. Also, by using the IMU sensor, based on the inclination of the cleaning robot 1000 being less than or equal to a reference angle, the cleaning robot 1000 may determine that the cleaning robot 1000 has moved away from the carpet; however, when the carpet is thin, it may be difficult to determine, based on only the sensor value of the IMU sensor, whether the cleaning robot 1000 has completely descended to the floor, and because the cleaning pad may still be located on the carpet even when the wheel thereof has descended from the carpet, the cleaning pad may touch the carpet in the case of performing pad-down of the cleaning pad.

Also, in the case of performing pad-down of the cleaning pad at a position too far from the carpet, an area around the carpet may not be cleaned with a wet mop.

The cleaning robot 1000 may prevent the carpet from being wetted due to the cleaning pad, by performing pad-down of the cleaning pad after moving a reference distance or more from the position at which the floor is sensed.

According to an embodiment of the present disclosure, the cleaning robot 1000 may calculate an actual movement distance based on the distance from the surrounding environment obtained through a lidar sensor, which is a position recognition sensor, after rotating the wheel motor by the number of rotations of the wheel motor corresponding to a reference distance. The cleaning robot 1000 may perform pad-down of the cleaning pad based on whether the actual movement distance is greater than the reference distance.

According to an embodiment of the present disclosure, as illustrated in FIG. 5, the cleaning robot 1000 may set a range 520 corresponding to the size of the cleaning robot 1000 as a predetermined number (e.g., n×n) of cells based on the position 510 at which the floor is sensed, and may determine whether the cleaning robot 1000 has moved away therefrom by the size of the cleaning robot 1000 or more based on the position of the cleaning robot 1000 in the cell.

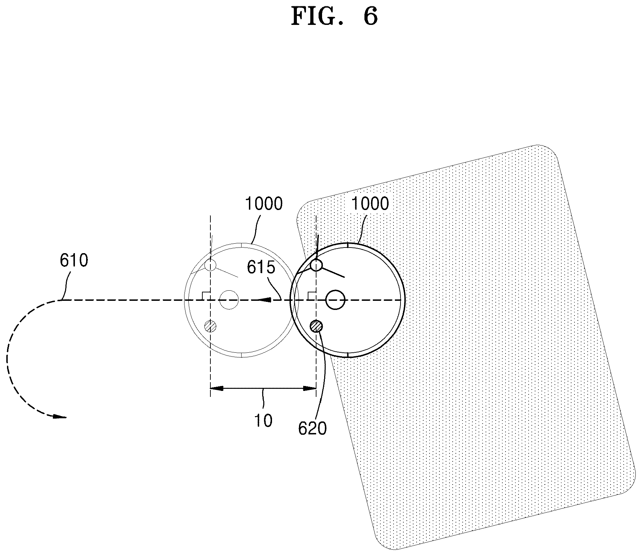

FIG. 6 illustrates a method by which a cleaning robot 1000 performs pad-down of a cleaning pad after moving away from a carpet while moving along a driving path, according to an embodiment of the present disclosure.

Referring to FIG. 6, the cleaning robot 1000 may resume driving of the wet cleaning module and perform pad-down of the cleaning pad, based on moving a reference distance 10, from a position 620 at which the floor is sensed, in a driving direction of the cleaning robot 1000 at a time point when the floor is sensed.

The cleaning robot 1000 may drive on the carpet while maintaining the pad-up of the cleaning pad. The cleaning robot 1000 may move to the floor along a predetermined driving path 610 while driving on the carpet. When starting to move away from the carpet, the cleaning robot 1000 may sense the floor through the floor sensing sensor 1710.

Based on the floor being sensed, when having driven along the driving path 610 by the reference distance 10 from the position 620 at which the floor starts to be sensed, the cleaning robot 1000 may determine whether it has driven the reference distance 10 in a driving direction 615 of the cleaning robot 1000 at the time point when the floor starts to be sensed.

As illustrated in FIG. 6, when the direction of the driving path 610 within the reference distance 10 and the driving direction 615 at the time point when the floor starts to be sensed are the same as each other, the cleaning robot 1000 may drive the reference distance 10 in the driving direction 615 of the cleaning robot 1000 at the time point when the floor starts to be sensed.

The cleaning robot 1000 may maintain the pad-up of the cleaning pad while driving the reference distance 10 and may perform pad-down of the cleaning pad based on determining that the cleaning robot 1000 has driven the reference distance 10 in the driving direction 615 of the cleaning robot 1000 at the time point when the floor starts to be sensed.

Also, the cleaning robot 1000 may determine whether the carpet is sensed through the floor sensing sensor 1710 even while driving the reference distance 10 in the driving direction 615 of the cleaning robot 1000 at the time point when the floor starts to be sensed, and may maintain the pad-up of the cleaning pad without considering the reference distance 10, based on the carpet being sensed again while driving the reference distance 10.

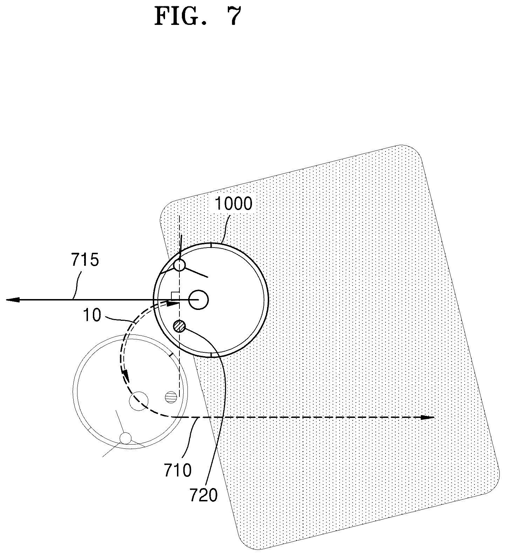

FIG. 7 illustrates a method by which a cleaning robot 1000 maintains the pad-up of a cleaning pad based on a driving direction being changed while moving to a floor along a driving path, according to an embodiment of the present disclosure.

Referring to FIG. 7, based on the driving direction of a driving path 710 being changed while moving a reference distance 10 from a position at which the floor is sensed, the cleaning robot 1000 may change the driving direction while maintaining the pause of the wet cleaning module and the pad-up of the cleaning pad.

The cleaning robot 1000 may drive on the carpet while maintaining the pad-up of the cleaning pad. The cleaning robot 1000 may move to the floor along a predetermined driving path 710 while driving on the carpet. When starting to move away from the carpet, the cleaning robot 1000 may sense the floor through the floor sensing sensor 1710.

Based on the floor being sensed, when having driven along the driving path 710 by the reference distance 10 from a position 720 at which the floor starts to be sensed, the cleaning robot 1000 may determine whether it has driven the reference distance 10 in a driving direction 715 of the cleaning robot 1000 at the time point when the floor starts to be sensed.

As illustrated in FIG. 7, when the direction of the driving path 710 changes within the reference distance 10, the cleaning robot 1000 may fail to move away from the carpet even when moving the reference distance 10. Also, when the direction of the driving path 710 changes by 180 degrees within the reference distance 10, the cleaning robot 1000 may return to the carpet.

The cleaning robot 1000 may maintain the pad-up of the cleaning pad while driving the reference distance 10, and may maintain the pad-up of the cleaning pad without performing pad-down of the cleaning pad even when the floor is continuously sensed, based on determining that the direction of the driving path 710 changes within the reference distance 10.

After moving the reference distance 10, the cleaning robot 1000 may sense the carpet while driving the next reference distance. Based on the carpet being sensed while driving the next reference distance, the cleaning robot 1000 may drive on the carpet while maintaining the pad-up of the cleaning pad.

After moving the reference distance 10, when the carpet is not sensed while driving the next reference distance or while driving a predetermined distance, the cleaning robot 1000 may perform pad-down of the cleaning pad.

Accordingly, as in the driving path illustrated in FIG. 7, when the cleaning robot 1000 moves from the carpet to the floor and then immediately re-enters the carpet, an unnecessary operation of again padding-up after padding-down the cleaning pad may be reduced.

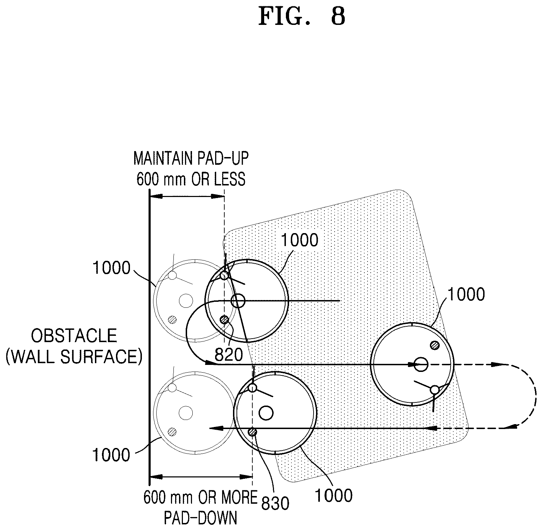

FIG. 8 illustrates a method by which a cleaning robot 1000 controls a cleaning pad when encountering an obstacle while moving from a carpet to a floor, according to an embodiment of the present disclosure.

Referring to FIG. 8, the cleaning robot 1000 may change the driving direction of the driving path while maintaining the pause of the wet cleaning module and the pad-up of the cleaning pad, when an obstacle is sensed while moving a reference distance from the position at which the floor is sensed.

Referring to the left side of FIG. 8, the cleaning robot 1000 may drive in a zigzag pattern in a cleaning target area. The cleaning robot 1000 may drive on the carpet while maintaining the pad-up of the cleaning pad. When starting to move away from the carpet, the cleaning robot 1000 may sense the floor through the floor sensing sensor 1710. According to an embodiment of the present disclosure, the reference distance may be 600 mm that is equal to the cross-sectional length of the cleaning robot 1000 plus an error margin.

The cleaning robot 1000 may sense an obstacle that is not stored in the map, before moving a reference distance from a position 820 at which the floor starts to be sensed. For example, an obstacle may be located at 500 mm within a reference distance from the position 820 at which the floor starts to be sensed.

Based on an obstacle being sensed before moving the reference distance from the position 820 at which the floor starts to be sensed, even when the floor is continuously detected, the cleaning robot 1000 may change the driving direction by 180 degrees by avoiding the obstacle without performing pad-down of the cleaning pad. Also, after changing the driving direction by 180 degrees, the cleaning robot 1000 may drive on the carpet while maintaining the pad-up of the cleaning pad, when the carpet is re-detected within a predetermined distance (e.g., a reference distance).

Also, as illustrated in the lower left side of FIG. 8, the cleaning robot 1000 may encounter an obstacle located at 700 mm that is a reference distance or more from a position 830 at which the floor starts to be sensed. The cleaning robot 1000 may perform pad-down of the cleaning pad based on moving a reference distance of 600 mm in the same direction from the position 830 at which the floor starts to be sensed. Also, the cleaning robot 1000 may continue driving while performing pad-down of the cleaning pad.

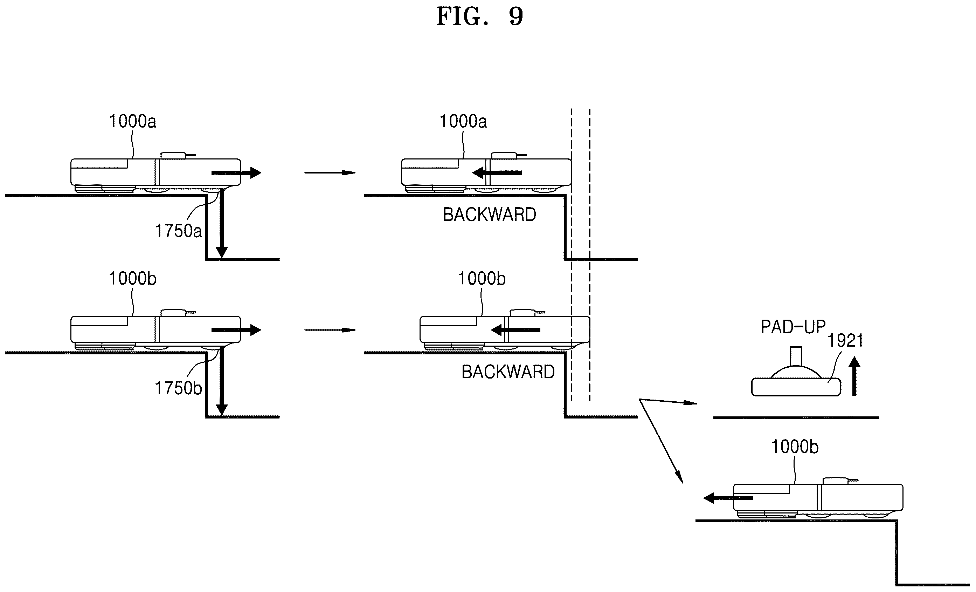

FIG. 9 illustrates a method by which a cleaning robot 1000 performs pad-up or pad-down of a cleaning pad when moving backward after sensing a risk of falling, according to an embodiment of the present disclosure.

Referring to FIG. 9, cleaning robots 1000a and 1000b may attempt backward driving by a predetermined distance, upon sensing a risk of falling of the cleaning robots 1000a and 1000b through falling prevention sensors 1750a and 1750b while driving. Also, when a backward movement distance of the cleaning robots 1000a and 1000b after attempting backward driving is less than or equal to a predetermined backward distance, the cleaning robots 1000a and 1000b may pause the driving of the wet cleaning module, perform pad-up of the cleaning pad 1921, and then reattempt backward driving.

Referring to the upper side of FIG. 9, the cleaning robot 1000a may move backward based on sensing a risk of falling. For example, based on sensing a risk of falling, the cleaning robot 1000a may move backward by a predetermined falling sensing backward distance and then change the driving direction to resume driving along the driving path.

Referring to the lower side of FIG. 9, the cleaning robot 1000b may attempt backward movement by a predetermined falling sensing backward distance based on sensing a risk of falling. In this case, when the floor is wetted by the wet cleaning pad 1921, even when the cleaning robot 1000b attempts backward movement, the wheel of the cleaning robot 1000 may slip and thus the cleaning robot 1000 may not move backward by a predetermined falling sensing backward distance. Also, when the wet cleaning pad 1921 is adhered to the floor, the friction between the floor and the cleaning pad 1921 may increase and thus the robot 1000b may not move backward by a predetermined falling sensing backward distance even when attempting backward movement.

The cleaning robot 1000b may attempt backward movement by the falling sensing backward distance, upon sensing a risk of falling. After attempting backward movement, the cleaning robot 1000b may determine whether it has moved backward by the falling sensing backward distance. For example, the cleaning robot 1000b may calculate an actual movement distance based on the distance from the surrounding environment obtained through a lidar sensor, which is a position recognition sensor, after rotating the wheel motor by the number of rotations of the wheel motor corresponding to the falling sensing backward distance.

When the actual movement distance is less than the falling sensing backward distance, the cleaning robot 1000b may determine that it has not moved backward by the falling sensing backward distance. Also, when a risk of falling is continuously sensed through the falling prevention sensor 1750b, the cleaning robot 1000b may determine that it has not moved backward by the falling sensing backward distance.

Based on determining that it has not moved backward by the falling sensing backward distance, the cleaning robot 1000b may pause the wet cleaning module, pad-up the cleaning pad 1921, and then reattempt backward movement. Also, after reattempting backward movement, based on determining that it has moved backward by the falling sensing backward distance, the cleaning robot 1000b may change the gaze direction to the opposite direction (rotation in place by about 180 degrees). Also, the cleaning robot 1000b may resume driving of the wet cleaning module, perform pad-down of the cleaning pad 1921, and then drive in the opposite direction of the driving direction before sensing a risk of falling.

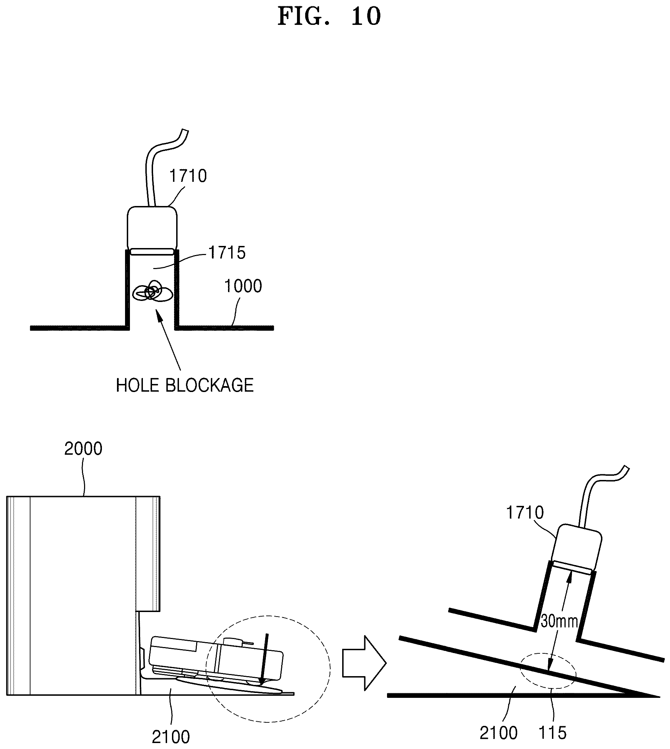

FIG. 10 illustrates a method by which a cleaning robot 1000 determines a hole blockage of a floor sensing sensor, according to an embodiment of the present disclosure.

Referring to FIG. 10, when the cleaning robot 1000 is docked on a charging station, the cleaning robot 1000 may determine whether a hole 1715 in which the floor sensing sensor 1710 is provided is blocked by fibers, based on whether a docking floor of the charging station is detected as a floor.

As illustrated in FIG. 10, the floor sensing sensor 1710 of the cleaning robot 1000 may be located inside the hole 1715 with a depth of about 30 mm from the bottom surface of the cleaning robot 1000 toward the inside of the cleaning robot 1000. As the driving time of the cleaning robot 1000 increases or depending on the material of the floor, fluff, thread, hair, and dust may be entangled to block the hole 1715 of the floor sensing sensor 1710.

Also, a charging station 2000 may include a floor mechanism 2100 on which the cleaning robot 1000 is seated.

Whenever the cleaning robot 1000 is seated on the charging station 2000, the floor sensing sensor 1710 of the cleaning robot 1000 may be located on the same area 115 of the floor mechanism 2100. Also, the area 115 in which the floor sensing sensor 1710 is located when seated on the charging station 2000 may be a non-fiber area.

After the cleaning robot 1000 is seated on the charging station, the cleaning robot 1000 may sense the material of the floor through the floor sensing sensor 1710. For example, based on determining that the cleaning robot 1000 has returned to the charging station after driving and has been seated on the floor mechanism 2100 of the charging station, the cleaning robot 1000 may sense the material of the floor through the floor sensing sensor 1710.

Based on a fiber material being sensed after the cleaning robot 1000 is seated on the charging station, the cleaning robot 1000 may determine that the hole 1715 of the floor sensing sensor 1710 is blocked. Based on determining that the hole 1715 of the floor sensing sensor 1710 is blocked, the cleaning robot 1000 may output a blink or a notification sound indicating that the hole 1715 of the floor sensing sensor 1710 is blocked. Also, based on determining that the hole 1715 of the floor sensing sensor 1710 is blocked, the cleaning robot 1000 may transmit information indicating that the hole 1715 of the floor sensing sensor 1710 is blocked, to a user device through a server. Accordingly, the user device may display information indicating that the hole 1715 of the floor sensing sensor 1710 is blocked.

Based on a non-fiber material being sensed after the cleaning robot 1000 is seated on the charging station, the cleaning robot 1000 may determine that the hole 1715 of the floor sensing sensor 1710 is not blocked.

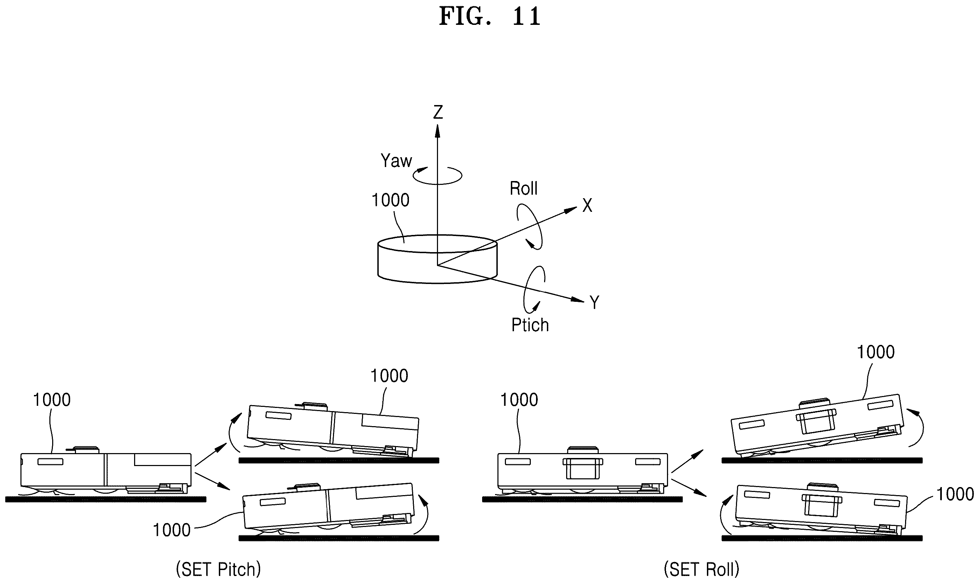

FIG. 11 illustrates a method by which a cleaning robot 1000 performs pad-up of a cleaning pad based on an inclination of the cleaning robot 1000, according to an embodiment of the present disclosure.

Referring to FIG. 11, the cleaning robot 1000 may pause the driving of the wet cleaning module and perform pad-up of the cleaning pad, based on the inclination of the cleaning robot 1000 detected through the IMU sensor exceeding a reference angle.

In the XYZ coordinate system of FIG. 11, it is assumed that the X-axis direction is the front direction of the cleaning robot 1000, the Y-axis direction is the side direction of the cleaning robot 1000, and the Z-axis direction is the top direction of the cleaning robot 1000. Accordingly, a yaw inclination may refer to a clockwise or counterclockwise rotation angle of the cleaning robot 1000 around the Z axis, a pitch inclination may refer to a forward/backward inclination of the cleaning robot 1000 rotating around the Y axis, and a roll inclination may refer to a left/right inclination of the cleaning robot 1000 rotating around the X axis.

The cleaning robot 1000 may detect the roll inclination, pitch inclination, and yaw inclination of the cleaning robot 1000 through the IMU sensor. When at least one of the roll inclination or pitch inclination of the cleaning robot 1000 exceeds a reference angle, the cleaning robot 1000 may determine that the inclination of the cleaning robot 1000 is in an abnormal driving state and may pause the wet cleaning module and perform pad-up of the cleaning pad.

For example, when the cleaning robot 1000 climbs over a step such as a threshold or a round bar while driving on the floor, at least one of the roll inclination or pitch inclination of the cleaning robot 1000 may exceed a reference angle.

Also, for example, when the cleaning robot 1000 climbs the carpet while driving on the floor, at least one of the roll inclination or pitch inclination of the cleaning robot 1000 may exceed a reference angle.

According to an embodiment of the present disclosure, when the carpet is sensed through the floor sensing sensor and at least one of the roll inclination or pitch inclination of the cleaning robot 1000 exceeds a reference carpet angle that is less than the reference angle, the cleaning robot 1000 may pause the wet cleaning module and perform pad-up of the cleaning pad.

Accordingly, when the carpet is sensed, even when a smaller angle change than in a general case occurs, the cleaning robot 1000 may pause the wet cleaning module and pad-up the cleaning pad.

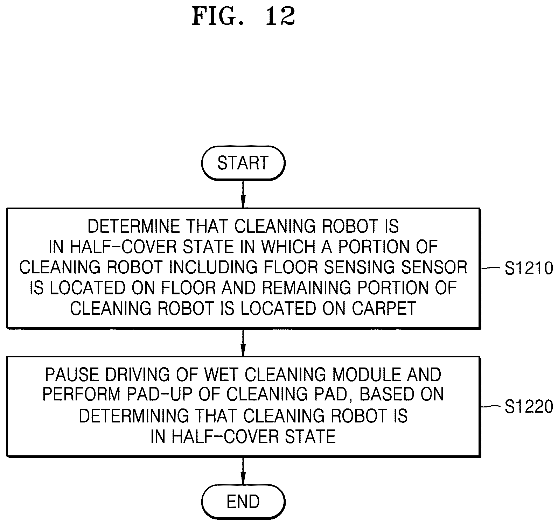

FIG. 12 illustrates a method by which a cleaning robot 1000 performs pad-up of a cleaning pad based on an inclination of the cleaning robot 1000, according to an embodiment of the present disclosure.

In operation S1210, the cleaning robot 1000 may determine that the cleaning robot 1000 is in a half-cover state in which a portion of the cleaning robot 1000 including the floor sensing sensor is located on the floor and the remaining portion of the cleaning robot 1000 is located on the carpet.

When the wheel near the floor sensing sensor is located on the floor and the opposite wheel is located on the carpet while the cleaning robot 1000 is driving, the floor may be sensed through the floor sensing sensor and it may be detected through the IMU sensor that the roll inclination is greater than or equal to a reference carpet angle.

The cleaning robot 1000 may determine that the cleaning robot 1000 is in a half-cover state, based on the fact that the floor is sensed through the floor sensing sensor and the roll inclination detected through the IMU sensor is greater than or equal to a reference carpet angle.

Also, when the half-cover state continues, the cleaning robot 1000 may determine that it drives along the boundary of the carpet in the half-cover state. Also, while driving along the boundary of the carpet, the cleaning robot 1000 may store the on-map position of an area in which the carpet is placed.

In operation S1220, the cleaning robot 1000 may pause the driving of the wet cleaning module and perform pad-up of the cleaning pad.

Based on determining that the cleaning robot 1000 is in the half-cover state, the cleaning robot 1000 may pause the driving of the wet cleaning module and perform pad-up of the cleaning pad. Also, until the half-cover state ends, the cleaning robot 1000 may pause the driving of the wet cleaning module and perform pad-up of the cleaning pad.

Based on the floor being sensed through the floor sensing sensor and the roll inclination detected through the IMU sensor being in a normal state (e.g., a state in which the main body of the cleaning robot 1000 is placed on the floor), the cleaning robot 1000 may determine that the half-cover state has ended. Based on determining that the half-cover state has ended, the cleaning robot 1000 may resume driving of the wet cleaning module and perform pad-down of the cleaning pad.

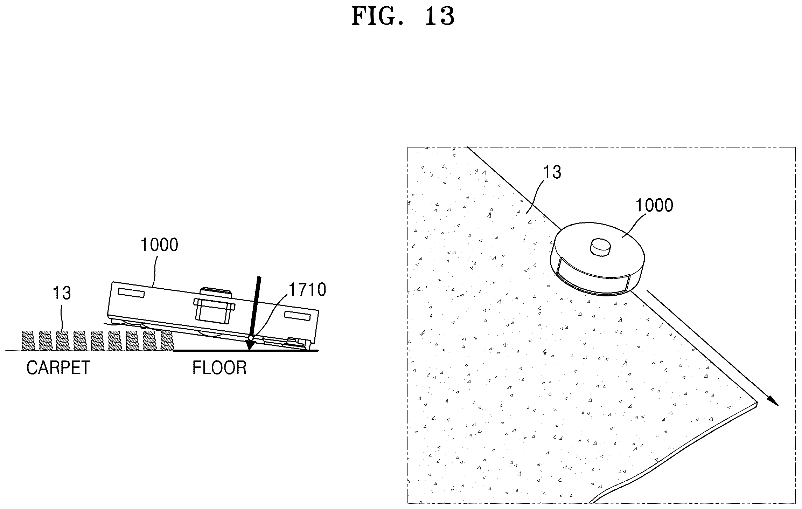

FIG. 13 illustrates a method by which a cleaning robot 1000 performs half-cover driving, according to an embodiment of the present disclosure.

Referring to the left side of FIG. 13, the cleaning robot 1000 may detect whether the cleaning robot 1000 is in a half-cover driving state in which a portion of the cleaning robot 1000 including the floor sensing sensor 1710 is located on the floor and the remaining portion of the cleaning robot 1000 is located on a carpet 13 while driving.

The cleaning robot 1000 may determine that the cleaning robot 1000 is in the half-cover state, based on the floor being sensed through the floor sensing sensor 1710 and the roll inclination detected through the IMU sensor being greater than or equal to a reference carpet (13) angle.

Based on determining that the cleaning robot 1000 is in the half-cover state, the cleaning robot 1000 may pause the driving of the wet cleaning module and perform pad-up of the cleaning pad.

Referring to the right side of FIG. 13, when the half-cover state continues, the cleaning robot 1000 may determine that the cleaning robot 1000 drives along the boundary of the carpet 13 in the half-cover state. Also, while driving along the boundary of the carpet 13, the cleaning robot 1000 may store the on-map position of an area in which the carpet 13 is placed.

Also, until the half-cover state ends, the cleaning robot 1000 may pause the driving of the wet cleaning module and perform pad-up of the cleaning pad. Based on determining that the half-cover state has ended, the cleaning robot 1000 may resume driving of the wet cleaning module and perform pad-down of the cleaning pad.

According to an embodiment of the present disclosure, as the floor is sensed through the floor sensing sensor 1710 in the half-cover state, the cleaning robot 1000 may move a reference distance from a position at which the roll inclination detected through the IMU sensor starts to be detected as a normal state and then may resume driving of the wet cleaning module and perform pad-down of the cleaning pad.

According to an embodiment of the present disclosure, the cleaning robot 1000 may dry clean the internal area of the carpet 13 based on map information indicating the position of the area of the carpet 13.

According to an embodiment of the present disclosure, based on the completion of cleaning the internal area of the carpet 13, the cleaning robot 1000 may determine to perform wet cleaning on an area excluding the area of the carpet 13. Accordingly, based on the fact that the cleaning robot 1000 moves from the carpet 13 to the floor and moves away by a reference distance from the position at which the floor is sensed, the cleaning robot 1000 may perform pad-down of the cleaning pad and drive the wet cleaning module.

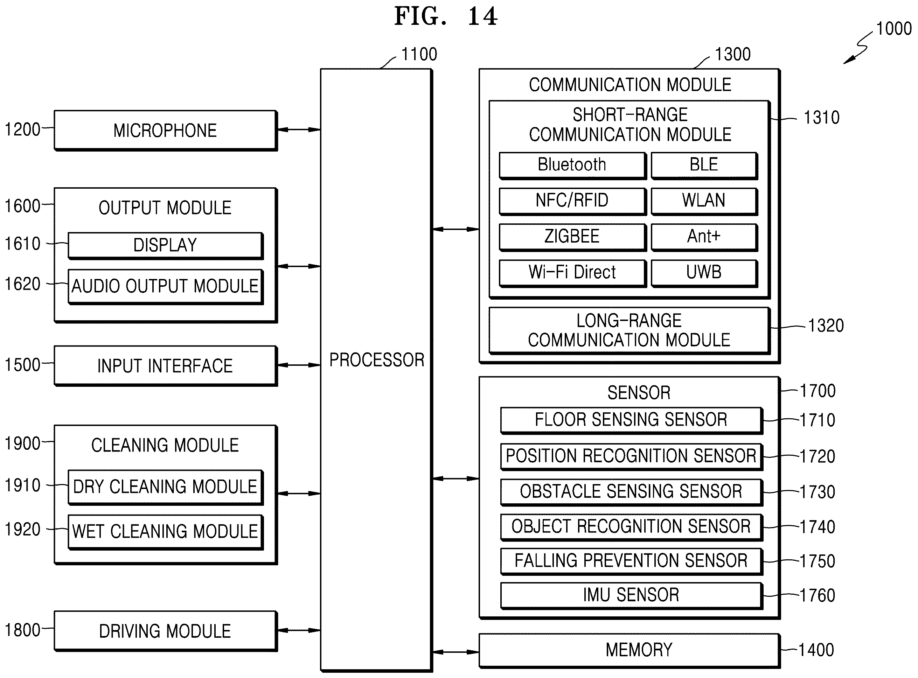

FIG. 14 illustrates a block diagram of a cleaning robot 1000 according to an embodiment of the present disclosure.

Referring to FIG. 14, the cleaning robot 1000 may include a processor 1100, a microphone 1200, a communication module 1300, a memory 1400, an input interface 1500, an output module 1600, a sensor 1700, a driving module 1800, and a cleaning module 1900. The same reference numerals may be used for the same components as those illustrated in FIG. 2.

Not all of the illustrated components are essential components of the cleaning robot 1000. The cleaning robot 1000 may be implemented by more components than the components illustrated in FIG. 14 or may be implemented by less components than the components illustrated in FIG. 14.

The processor 1100 may control an overall operation of the cleaning robot 1000. By executing at least one instruction or programs stored in the memory 1400, the processor 1100 may control the microphone 1200, the communication module 1300, the input interface 1500, the output module 1600, the sensor 1700, the driving module 1800, and the cleaning module 1900.

The processor 1100 may include a separate neural processing unit (NPU) for performing an operation of a machine learning model. Also, the processor 1100 may include a central processing unit (CPU) and a graphic processing unit (GPU).

The memory 1400 may store various information, data, instructions, programs, and the like necessary for an operation of the cleaning robot 1000. The memory 1400 may include at least one of a volatile memory or a nonvolatile memory, or a combination thereof. The memory 1400 may include at least one type of storage medium from among flash memory type, hard disk type, multimedia card micro type, card type memory (e.g., SD or XD memory), random access memory (RAM), static random access memory (SRAM), read only memory (ROM), electronically erasable programmable read only memory (EEPROM), programmable read only memory (PROM), magnetic memory, magnetic disk, and optical disk. Also, the cleaning robot 1000 may operate a cloud server or a web storage for performing a storage function on the Internet.

At least one processor 1100 and at least one memory 1400 may be included in one controller. For example, at least one processor 1100 and at least one memory 1400 may be included in one micro controller unit (MCU).

Under control by the processor 1100, the communication module 1300 may transmit/receive information to/from an external device or an external server according to a protocol. The communication module 1300 may include at least one communication module and at least one port for transmitting/receiving data to/from an external device (not illustrated).

Also, the communication module 1300 may perform communication with an external device through at least one wired or wireless communication network. The communication module 1300 may include at least one of a short-range communication module 1310 or a long-range communication module 1320 or a combination thereof. The communication module 1300 may include at least one antenna for wirelessly communicating with other devices.

The short-range communication module 1310 may include at least one communication module performing communication according to the communication standard such as Bluetooth, WiFi, Bluetooth Low Energy (BLE), NFC/RFID, WiFi Direct, UWB, or ZigBee. Also, the long-range communication module 1320 may include a communication module (not illustrated) for performing communication through a network for Internet communication. Also, the long-range communication module 1320 may include a mobile communication module for performing communication according to the communication standard such as 3G, 4G, 5G, and/or 6G.

For example, the communication module 1300 may include a communication module such as an infrared (IR) communication module that may receive a control command from a remote controller (not illustrated) located at a short distance.

The output module 1600 may include a display 1610 and an audio output module 1620.

The audio output module 1620 may output an audio signal to the outside of the cleaning robot 1000. The audio output module 1620 may include, for example, a speaker or a receiver. The speaker may be used for general purposes such as multimedia playback or recording playback.

Under control by the processor 1100, the display 1610 may output image data image-processed by an image processor (not illustrated) through a display panel (not illustrated). The display panel (not illustrated) may include at least one of a liquid crystal display, a thin film transistor-liquid crystal display, an organic light emitting diode display, a flexible display, a three-dimensional (3D) display, or an electrophoretic display.

The input interface 1500 may receive a user input for controlling the cleaning robot 1000. The input interface 1500 may receive a user input and transmit the user input to the processor 1100.

The input interface 1500 may include, but is not limited to, user input electronic devices such as a touch panel for sensing a user's touch, a button for receiving a user's push operation, a wheel for receiving a user's rotation operation, a key board, and a dome switch.

Also, the input interface 1500 may include a voice recognition device for voice recognition. For example, the voice recognition device may include the microphone 1200, and the voice recognition device may receive a user's voice command or voice request. Accordingly, the processor 1100 may perform control such that an operation corresponding to the voice command or voice request is performed.

The cleaning module 1900 may include a dry cleaning module 1910 and a wet cleaning module 1920. The dry cleaning module 1910 may include a brush, a dust can, a dust separator, and a suction motor. The wet cleaning module 1920 may include a cleaning pad holder, a cleaning pad motor, a cleaning pad-up/down device module, a water tank, and a water supply motor.

The suction motor (or vacuum motor) may suction air into a suction port (not illustrated) of the cleaning robot 1000 by rotating a fan (not illustrated) connected to the suction motor. The suction motor may include, but is not limited to, a DC suction motor, a dry suction motor, and a wet suction motor.

The brush may be, but is not limited to, a bristle brush including a plurality of bristles or a fluff brush including fluff. The brush may be rotated by a driving force received from a brush motor (not illustrated). The brush may sweep off dust or foreign substances stuck to the floor and move the same to the suction port (not illustrated) of the cleaning robot 1000.

The dust can may store dust that is suctioned into the suction port (not illustrated) of the cleaning robot 1000 and then filtered off by a dust separator (not illustrated).

The cleaning pad motor may perform mopping by rotating a cleaning pad attached to the cleaning robot 1000. The cleaning pad-up/down device module may perform a pad-up operation of adhering a mop pad, which has been adhered to the floor, to the cleaning robot 1000 or a pad-down operation of adhering a mop pad, which has been adhered to the cleaning robot 1000, to the floor.

The sensor 1700 may include various types of sensors.

The sensor 1700 may include a floor sensing sensor 1710, a position recognition sensor 1720, an obstacle sensing sensor 1730, an object recognition sensor 1740, a falling prevention sensor 1750, and an IMU sensor 1760.

The floor sensing sensor 1710 may be described with reference to FIG. 2.

The position recognition sensor 1720 may include a time-of-flight (TOF) lidar sensor. The TOF lidar sensor may include an output unit for outputting a laser pulse signal and a receiving unit for receiving a reflection signal of the output laser pulse signal. The processor 1100 may control the TOF lidar sensor to determine the distance from the cleaning robot 1000 to an object around the cleaning robot 1000 or the on-map positions of objects.

The obstacle sensing sensor 1730 may output infrared or ultrasonic waves and receive a reflection signal reflected from an obstacle. The processor 1100 may control the obstacle sensing sensor 1730 to sense whether there is an obstacle in front.

The object recognition sensor 1740 may include a 2D camera sensor and a 3D camera sensor. The object recognition sensor 1740 may capture an image of the front of the cleaning robot 1000 and identify the types and positions of objects in the captured image.

The falling prevention sensor 1750 may include an infrared emitting unit and an infrared receiving unit provided toward the floor. The processor 1100 may control the infrared emitting unit of the falling prevention sensor 1750 to output infrared toward the floor and may control the infrared receiving unit to receive a reflection signal reflected from the floor. The processor 1100 may detect the distance from the cleaning robot 1000 to the floor based on the received reflection signal. Also, the processor 1100 may identify a falling possibility and a threshold based on the distance to the floor.

The IMU sensor 1760 may detect the inclination of the cleaning robot 1000.

The at least one processor 1100 may be configured to perform only dry cleaning by pausing the driving of the wet cleaning module 1920 and performing pad-up of a cleaning pad, when the cleaning robot 1000 is located on a carpet. Also, the at least one processor 1100 may be configured to restart wet cleaning together with dry cleaning by resuming driving of the wet cleaning module 1920 and performing pad-down of the cleaning pad, based on moving a reference distance to the floor along the driving path, when the floor is sensed through the floor sensing sensor 1710 while moving along the driving path.

In the cleaning robot 1000, the reference distance may be preset based on a size of the cleaning robot 1000.

The at least one processor 1100 may be configured to resume driving of the wet cleaning module 1920 and perform pad-down of the cleaning pad, based on moving the reference distance, from a position at which the floor is sensed, in a driving direction of the cleaning robot 1000 at a time point when the floor is sensed.

The at least one processor 1100 may be configured to change the driving direction while maintaining the pause of the wet cleaning module 1920 and the pad-up of the cleaning pad, based on the driving direction of the driving path being changed while moving the reference distance from the position at which the floor is sensed.

The at least one processor 1100 may be configured to change the driving direction of the driving path while maintaining the pause of the wet cleaning module 1920 and the pad-up of the cleaning pad, when an obstacle is sensed while moving the reference distance from the position at which the floor is sensed.

The at least one processor 1100 may be configured to attempt backward driving by a predetermined distance, upon sensing a risk of falling of the cleaning robot 1000 through the falling prevention sensor 1750. Also, the at least one processor 1100 may be configured to pause the driving of the wet cleaning module 1920 and perform pad-up of the cleaning pad and then reattempt the backward driving, when a backward movement distance of the cleaning robot 1000 is less than or equal to the predetermined backward distance after attempting the backward driving.

The at least one processor 1100 may be configured to, when the cleaning robot 1000 is docked on a charging station, determine whether a hole in which the floor sensing sensor 1710 is provided is blocked by fibers, based on whether a docking floor of the charging station is detected as a floor.

The at least one processor 1100 may be configured to pause the driving of the wet cleaning module 1920 and perform pad-up of the cleaning pad, based on whether an inclination of the cleaning robot 1000 detected through an IMU sensor exceeds a reference angle.

The at least one processor 1100 may be configured to pause the driving of the wet cleaning module 1920 and perform pad-up of the cleaning pad, based on being in a half-cover driving state in which a portion of the cleaning robot 1000 including the floor sensing sensor 1710 is located on a floor, the remaining portion of the cleaning robot 1000 is located on a carpet, and the cleaning robot 1000 drives along a boundary of the carpet.

The at least one processor 1100 may be configured to determine an on-map position of an area in which the carpet is placed, based on identifying the boundary of the carpet. Also, the at least one processor 1100 may be configured to dry clean an interior of the carpet while maintaining the pause of the wet cleaning module 1920 and the pad-up of the cleaning pad, when the half-cover driving state ends.

A machine-readable storage medium may be provided in the form of a non-transitory storage medium. Here, the term "non-transitory storage medium" may mean that the storage medium is a tangible device and does not include signals (e.g., electromagnetic waves), and may mean that data may be semipermanently or temporarily stored in the storage medium. For example, the "non-transitory storage medium" may include a buffer in which data is temporarily stored.

According to an embodiment of the present disclosure, the method according to various embodiments of the present disclosure described herein may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

## Claims

1. A cleaning robot (1000) comprising:
a floor sensing sensor (1710);
a wet cleaning module (1920);
at least one memory (1400) storing one or more instructions; and
at least one processor (1100), wherein the at least one processor (1100) is configured to, by executing the one or more instructions stored in the memory (1400),
pause driving of the wet cleaning module (1920) and perform pad-up of a cleaning pad, when the cleaning robot (1000) is located on a carpet, and when a floor is sensed through the floor sensing sensor (1710) while moving along a driving path, resume driving of the wet cleaning module (1920) and perform pad-down of the cleaning pad, based on moving a reference distance to the floor along the driving path.

2. The cleaning robot of claim 1, wherein the reference distance is preset based on a size of the cleaning robot.

3. The cleaning robot of claim 1 or 2, wherein the at least one processor is configured to resume driving of the wet cleaning module and perform pad-down of the cleaning pad, based on moving the reference distance, from a position at which the floor is sensed, in a driving direction of the cleaning robot at a time point when the floor is sensed.

4. The cleaning robot of any one of claims 1 to 3, wherein the at least one processor is configured to change the driving direction while maintaining the pause of the wet cleaning module and the pad-up of the cleaning pad, based on the driving direction of the driving path being changed while moving the reference distance from the position at which the floor is sensed.

5. The cleaning robot of any one of claims 1 to 4, wherein the at least one processor is configured to change the driving direction of the driving path while maintaining the pause of the wet cleaning module and the pad-up of the cleaning pad, when an obstacle is sensed while moving the reference distance from the position at which the floor is sensed.

6. The cleaning robot of any one of claims 1 to 5, further comprising a falling
prevention sensor (1750),
wherein the at least one processor is configured to
attempt backward driving by a predetermined distance, upon sensing a risk of falling of the cleaning robot through the falling prevention sensor (1750), and
pause the driving of the wet cleaning module and perform pad-up of the cleaning pad and then reattempt the backward driving, when a backward movement distance of the cleaning robot is less than or equal to the predetermined backward distance after attempting the backward driving.

7. The cleaning robot of any one of claims 1 to 6, wherein the at least one processor is configured to, when the cleaning robot is docked on a charging station, determine whether a hole in which the floor sensing sensor is provided is blocked by fibers, based on whether a docking floor of the charging station is detected as a floor.

8. The cleaning robot of any one of claims 1 to 7, further comprising an inertial measurement unit (IMU) sensor,
wherein the at least one processor is configured to pause the driving of the wet cleaning module and perform pad-up of the cleaning pad, based on whether an inclination of the cleaning robot detected through the IMU sensor exceeds a reference angle.

9. The cleaning robot of any one of claims 1 to 8, wherein the at least one processor is configured to
pause the driving of the wet cleaning module and perform pad-up of the cleaning pad, based on being in a half-cover driving state in which a portion of the cleaning robot including the floor sensing sensor is located on a floor, the remaining portion of the cleaning robot is located on a carpet, and the cleaning robot drives along a boundary of the carpet.

10. The cleaning robot of claim 9, wherein the at least one processor is configured to
determine an on-map position of an area in which the carpet is placed, based on identifying the boundary of the carpet, and
dry clean an interior of the carpet while maintaining the pause of the wet cleaning module and the pad-up of the cleaning pad, when the half-cover driving state ends.

11. A cleaning method of a cleaning robot, the cleaning method comprising:
pausing driving of a wet cleaning module of the cleaning robot and performing pad-up of a cleaning pad, when the cleaning robot is located on a carpet; and
when a floor is sensed through a floor sensing sensor of the cleaning robot while moving along a driving path, resuming driving of the wet cleaning module and performing pad-down of the cleaning pad, based on moving a reference distance to the floor along the driving path.

12. The cleaning method of claim 11, wherein the reference distance is preset based on a size of the cleaning robot.

13. The cleaning method of claim 11 or 12, wherein the resuming of driving of the wet cleaning module and the performing of pad-down of the cleaning pad, based on moving the reference distance, comprises resuming driving of the wet cleaning module and performing pad-down of the cleaning pad, based on moving the reference distance, from a position at which the floor is sensed, in a driving direction of the cleaning robot at a time point when the floor is sensed.

14. The cleaning method of any one of claims 11 to 13, further comprising changing the driving direction while maintaining the pause of the wet cleaning module and the pad-up of the cleaning pad, based on the driving direction of the driving path being changed while moving the reference distance from the position at which the floor is sensed.

15. The cleaning method of any one of claims 11 to 14, further comprising change the driving direction of the driving path while maintaining the pause of the wet cleaning module and the pad-up of the cleaning pad, when an obstacle is sensed while moving the reference distance from the position at which the floor is sensed.
